# EUROPEAN PATENT SPECIFICATION

(11) **EP 4 549 241 B1**
(45) Date of publication and mention of the grant of the patent: **22.04.2026**
(21) Application number: 23207675.2
(22) Date of filing: 03.11.2023
(51) Int. Cl.: B60N 2/50

(54) **HEIGHT-ADJUSTABLE CHILD RESTRAINT**
HÖHENVERSTELLBARE KINDERSICHERUNG
DISPOSITIF DE RETENUE D'ENFANT RÉGLABLE EN HAUTEUR

(43) Date of publication of application: 07.05.2025
(73) Proprietor: Axkid AB, 431 37 Göteborg (SE)
(72) Inventor: Henning, Andreas, 116 39 Stockholm (SE); Traung, Filip, 422 50 Hisings Backa (SE); Lundgren, Daniel, 414 63 Göteborg (SE); Andersson, Johan, 434 32 Göteborg (SE)
(74) Representative: AWA Sweden AB

(56) References cited:
- FR-A1- 2 664 215
- US-A- 4 768 827
- US-A- 6 053 573

## Description

### Technical field

The present invention relates to a height-adjustable child restraint for use in a forward facing position.

### Background

A child restraint, also known as a car seat, is used to protect children during travel in a motor vehicle and is important to ensure that children ride safely and sit comfortably for both short and long journeys. To this end, there is constant work ongoing to ensure that children and parents feel safe when traveling by vehicle. US 4 768 827 discloses a height-adjustable child restraint.

There are different types of child restraints on the market, adapted for children of different ages and lengths.

An infant carrier is used for the youngest children, from birth to approximately 12 months. The infant carrier is easy to take in and out of the vehicle and allows the child to remain in the seat without having to be picked up.

When the child gets a little bit older, a rear-facing car seat is the safest choice. The rear facing car seat is usually installed and fixated in the vehicle and not moved that frequently. There are many different versions ranging from 105 cm in length to 125 cm in maximum child length.

A forward-facing car seat, also known as a high back booster seat or a booster seat for short, is used by older children still, preferably when they have reached a length of over 125 cm. The booster seat, as the name suggests, will boost the child high enough for the vehicle's lap and shoulder belts to restrain the child safely. It is needed because vehicle safety systems, such as seat belts, are designed to work for individuals from about 145-150 cm in height. Thus, the booster seat can be seen as an adapter between the child and the vehicles safety systems, and one main purpose of a forward-facing child restraint is to ensure that the child's body is positioned correctly in reference to the vehicle's seat belt.

Installation and mounting of a child restraint may be done by the vehicle's safety belt or with ISOFIX connectors, a standard interface for child restraints. To this end, a child restraint with height-adjustable seat section may be used. However, a height-adjustable seat section typically decreases the robustness of the child restraint and may cause the seat section to move away from the backrest of the vehicle's seat in the case of an accident. This is turn may cause safety hazards. Such problems have for instance been identified with height-adjustable seat sections that are based on scissors-technology.

### Summary of the invention

It is an object of the present invention to overcome the above mentioned problem, and to provide an improved height-adjustable child restraint which enables children of different ages and lengths to travel safely in the vehicle.

According to a first aspect of the present invention, this and other objects are achieved by a height-adjustable child restraint for use in a forward facing position, the child restraint comprising:
a seat portion for holding a child and a base portion, wherein the base portion comprises
an upper frame member for connection with the seat portion and a lower frame member to be placed on a vehicle seat, wherein at least one front beam connects a front portion of the upper frame member to a front portion of the lower frame member, and at least one rear beam connects a rear portion of the upper frame member to a rear portion of the lower frame member such that a parallelogram is formed; and
at least one guide plate connected to the lower frame member, and wherein at least one of the upper frame member and the rear beam is movably connected to the guide plate for vertical movement of the upper frame member relative the guide plate.

The present invention is based on the understanding that by movably connecting an upper frame member and/or a rear beam to a vertically extending guide plate, the child seat may be raised or lowered, at the same time as the child seat is prevented from moving in a forward direction during the case of an accident. The guide plate takes up the forces acting on the seat section in case of an accident and keeps it close to the backrest of the vehicle seat. Thus, the upper frame member is secured close to the backrest of the vehicle seat which is important for the belt to stay on the right place on the child's body.

Furthermore, an advantage of parallelogram mechanism over a scissor mechanism is that it is easier to lock, contains simpler parts and provides support/adapts to the calves.

The at least one guide plate may comprise a sliding rail having an upper end position and a lower end position, extending substantially vertically, and wherein at least one of the upper frame member and the rear beam may comprise a protrusion adapted to slide along the sliding rail. The sliding rail may have a certain width, which herein is referred to as a first width. The protrusion may thus fit in the first width of the sliding rail.

The angle between the front beam and the lower frame member may be at least 5 degrees, preferable at least 10 degrees when the protrusion is in the lower end position of the sliding rail. Similarly, the angle between the rear beam and the lower frame member may be at least 5 degrees, preferable at least 10 degrees when the protrusion is in the lower end position of the sliding rail.

The guide plate may have a main extension substantially perpendicular to the lower frame member. Hereby, the upper frame member is allowed to move in a substantially perpendicular direction in relation to the lower frame member.

The guide plate may comprise a first part adapted to be connected with at least one of the upper frame member and the rear beam, the first part extending parallel to the main extension, and a second part adapted to be connected with the lower frame member, and wherein the second part deviates from the main extension. In other words, at least one of the upper frame member and the rear beam may be connected to a first part of the guide plate, extending parallel to the main extension. The guide plate may further comprise a second part, deviating from the main extension, for connection with the lower frame member. The sliding rail may thus be provided in the first part of the guide plate.

The second part of the guide plate may have a main extension that is substantially nonparallel with both the lower frame member and the first part of the guide plate.

The second part of the guide plate may be provided in an angle relative the first part of the guide plate, i.e. the main extension. Hereby a void may be formed between the second part of the guide plate and the vehicle seat. This is beneficial since many vehicles are provided with a pillow between the seat section and the backrest. In these cases, the void allows the guide plate to be pressed tight to the backrest of the vehicle seat. Furthermore, the vehicle's safety belt, in particular the belt-buckle, may be arranged in the void formed beneath and/or by the side the guide plate. This is beneficial when the child restraint is placed in the middle of the back seat where there is less space than on each side of the back seat.

For the same purpose, the rear portion of the lower frame member may have an endpoint forward to and offset from a plane of the main extension. The void formed between the lower frame member and the backrest of the vehicle seat allows the child restraint to be pressed firmly to the backrest of the vehicle seat and the vehicle's safety belt, in particular the belt-buckle, may be arranged in the void. Additionally, the base portion of the child restraint takes up less space. For the same reason, the base portion may comprise retractable ISOFIX.

The child restraint may further comprise a sliding member arranged inside the lower frame member and wherein the front and rear beams are connected to the sliding member. The sliding member enables locking of the front and rear beams, respectively, to the lower frame member. Hereby a single component (the sliding member) is locked to another (the lower frame member) instead of two components which would be the case without the sliding member. The sliding member may be locked to the lower frame member by means of a pin.

By moving the sliding member back and forth in a vertical direction, i.e. in the direction of travel, the upper frame member is raised and lowered as the angle between the front and rear beams, respectively, and the lower frame member changes.

The front beam may comprise a stabilizing element pivotally connected to the lower frame member. The stabilizing element is a compliment to the guide plate and prevents the upper frame member from moving forward and loose contact with the backrest of the vehicle seat in the case of an accident. The stabilizing element may be pivotally connected to the front beam.

The front and rear beams may be pivotally connected to the upper and lower frame members. When then lower frame member comprises a sliding member, the front and rear beams may be pivotally connected to the sliding member. Hence, the front and rear beams may be directly connected to the sliding member and indirectly connected to the lower frame member.

The front and rear beams may be rotatably connected to the upper and lower frame members.

The guide plate may be integrated into the lower frame member.

The guide plate may extend above the upper frame member, when the upper frame member is arranged in its uppermost position.

It should be noted that the child restraint mat be provided with a backrest attached to the guide plate. Alternatively, the child restraint may not comprise a backrest. When a backrest is attached to the guide plate, above the upper frame member, when the upper frame member is arranged in its uppermost position, the pivot point of the backrest is higher than the lower frame member. It is advantageous to have a high pivot point of the backrest since the rear side of the child restraint and the backrest thereof then follows the shape of the vehicle's backrest. For security reasons, a high pivot point of the backrest of the child restraint is advantageous as it makes the shape of the child restraint similar to the shape of the vehicle seat and also allows the child restraint to fit better in the vehicle seat and to be pressed close to the backrest of the vehicle seat.

The child restraint may further comprise a thigh support located adjacent to the front beam. A padding may be provided on the thigh support. The thigh support gives support to the smallest children's legs and feet when the upper frame member is at the highest position. When the upper frame member is at the lowest position, and the child restraint is used by older children, the thigh support may function as an extended seat portion.

The height-adjustable child restraint may be configured to receive the vehicle's safety belt for securing the child. Hereby, when using the height-adjustable child restraint, the child may be secured using the vehicle's safety belt. Alternatively, the child restraint may comprise an internal harness for securing the child. The term "internal harness" should in this context be interpreted as an internal safety belt.

The upper frame member and the rear beam may both be movably connected to the guide plate. The term "connected." in this context should be interpreted as directly connected.

The lower frame member may comprise an inner surface and an outer surface, and wherein the front beam, the rear beam and the guide plate may be connected to the inner surface of the lower frame member.

The child restraint may further comprise a support leg attached to the lower frame member and arranged to be in contact with the floor of the vehicle for providing additional support and robustness.

### Brief description of the drawings

These and other aspects of the present invention will now be described in more detail, with reference to the appended drawings showing currently preferred embodiments of the invention.
Fig 1 is a perspective view of the height-adjustable child restraint according to an embodiment of the present invention;
Fig. 2 is a perspective view of the base portion of the height-adjustable restraint in Fig. 1;
Figs. 3a-b are a side view and a perspective view of the base portion of a height-adjustable child restraint according to an embodiment of the present invention;
Figs. 4a-c show different configurations of the base portion in Fig. 2.

### Detailed description

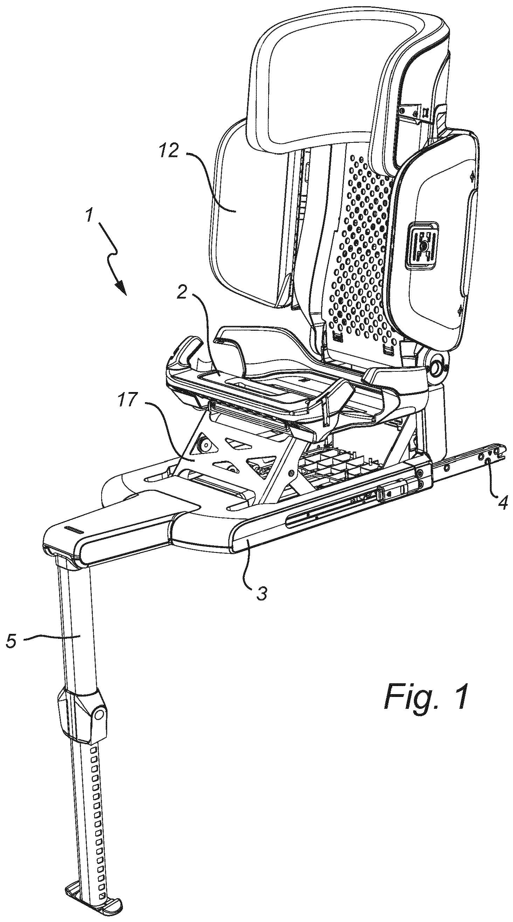

Fig. 1 illustrates a height-adjustable child restraint 1 for use in a forward facing position. The child restraint 1 comprises a seat portion 2 for holding a child and a base portion 3 to be placed on a vehicles seat. The seat portion 2 may be detachably connected to the base portion 3. The child restraint 1 may be secured to the vehicle by ISOFIX attached to the rear of the base portion 3 and/or a support leg 5 attached to the front of the base portion 3, seen in a direction of travel.

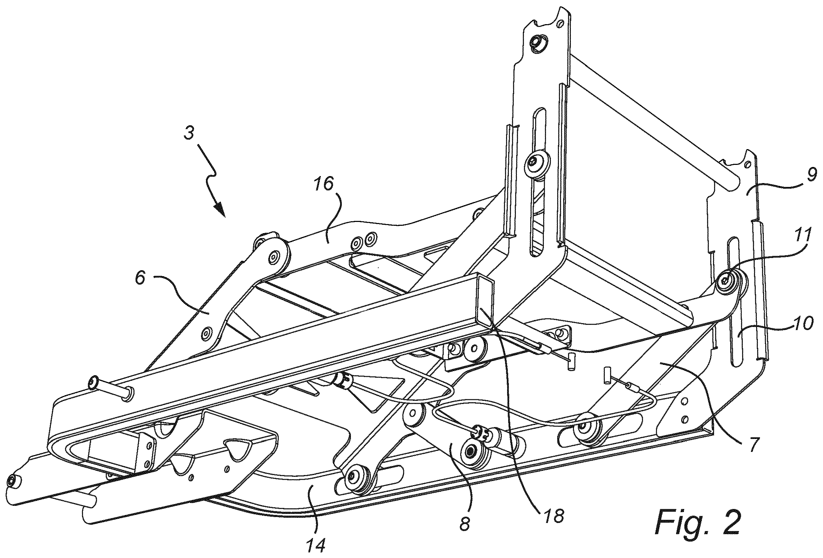

The base portion 3 of the child restraint 1 in Fig. 1 is illustrated in Fig. 2. However in this figure, the support leg and the ISOFIX are not shown. The base portion 3 comprises an upper frame member 16 for holding the seat portion 2. The upper frame member 16 thus forms a seat section for the seat portion 2.

The base portion 3 further comprises a lower frame member 14 to be placed on a vehicle seat. The upper frame member 16 and the lower frame member 14 are connected to each other by means of at least one front beam 6. The front beam 6 is pivotally connected to the upper frame member 16. The connection between the front beam 6 and the upper frame member 16 is fixed in the sense that the front beam 6 cannot slide along the upper frame member 16. The front beam 6 is also pivotally connected to the lower frame member 14, although the front beam 6 may, contrary to the upper frame member 16, slide along the lower frame member 14.

The base portion 3 further comprises at least one rear beam 7. Thus a parallelogram is formed by the upper frame member 16, the lower frame member 14, the front beam 6, and the rear beam 7. The front beam 6 and the rear beam 7 are substantially parallel to each other. So are also the upper frame member 16 and the lower frame member 14.

The front beam 6 connects a front portion of the upper frame member 16 to a front portion of the lower frame member 14 and the rear beam 7 connects a rear portion of the upper frame member 16 to a rear portion of the lower frame member 14. Similar to the front beam 6, the rear beam 7 is pivotally connected to the upper frame member 16 without the ability to slide along it. It is also pivotally connected to the lower frame member 14 with the ability to slide along it.

The number of front and rear beams 6, 7, respectively, may vary. In Figs. 1 and 2, two front beams 6 connect the front portion of the upper frame member 16 to the front portion of the lower frame member 14. Similarly, two rear beams 7 connect the rear portion of the upper frame member 16 to the rear portion of the lower frame member 14.

The base portion 3 further comprises at least one guide plate 9 that is substantially perpendicular to the lower frame member 14. A lower portion of the guide plate 9 is connected to a rear portion of the lower frame member 14, behind the rear beam 7, as seen in the direction of travel. The upper frame member 16 is slidably connected to the guide plate 9 such that the upper frame member 16 can be raised or lowered in a vertical direction. Hereby, the position of the seat section can be raised or lowered. The connection between the upper frame member 16 and the guide plate 9 assures that the upper frame member 16 is kept close to the backrest of the vehicle seat even in the case of an accident. An upper portion of the rear beam 7 is also slidably connected to the guide plate 9.

The guide plate 9 may extend above the upper frame member 16 when the upper frame member 16 is in its uppermost position. Hereby, a backrest 12 may be attached to the child restraint 1 as illustrated in Fig. 1. The child restraint 1 in Fig. 2 is provided with two guide plates 9, of which both extend above the upper frame member 16.

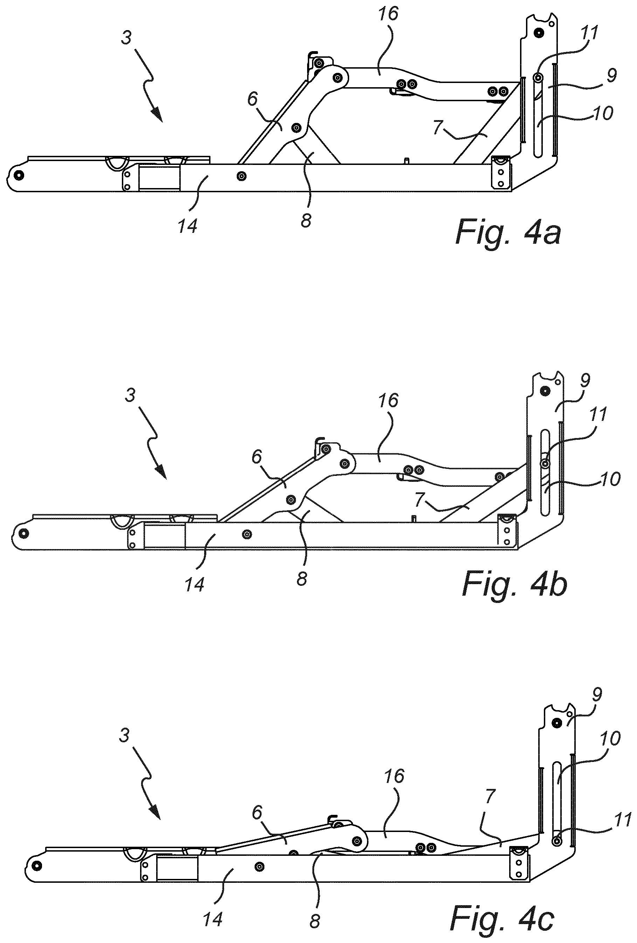

The guide plate 9 comprises a first part that is connected to the upper frame member 16 and the rear beam 7. The first part extends substantially parallel to the main extension of the guide plate 9. The guide plate 9 further comprises a second part that is connected to the lower frame member 14. The second part deviates from the main extension. A sliding rail 10 is provided in the first part of the guide plate 9 as will be described further in Figs 4a-c.

The second part is provided in an angle relative to the first part, i.e. the main extension. Hereby a void is formed between the second part and the vehicle seat.

The second part of the guide plate 9 has a main extension that is substantially nonparallel with both the lower frame member 14 and the first part of the guide plate 9. Hereby a void is formed between the lower frame member 14 and the backrest of the vehicle seat, such that the child restraint 1 can be pressed firmly to the backrest of the vehicle seat.

The rear portion of the lower frame member 14 has an endpoint 18 forward to and offset from a plane of the main extension. The base portion 3 of the child restraint 1 thus takes up less space and hereby allows better access to the car belt buckle. For the same reason, the base portion 3 may comprise retractable ISOFIX.

As illustrated in Figs. 1 and 2, the front beam 6 may comprise a stabilizing element 8 connected to the lower frame member 14. The stabilizing element 8 gives support to the parallelogram and prevents pivoting of the upper frame member 16. The stabilizing element 8 is connected to a central portion of the front beam 6. The stabilizing element 8 is pivotally connected to the front beam 6 and to the lower frame member 14 but cannot slide along any of them.

As further illustrated in Fig. 1, the base portion 3 may comprise a thigh support 17 for resting the child's legs when the upper frame member 16 is at the highest position. This is the position to be used for the youngest children. When the children get older, the lowest position of the upper frame member 16 is being utilized. In this position, the thigh support 17 may function as an extended seat portion with a padding provided thereto.

The thigh support 17 is located adjacent to the front beam 6. The angle between the thigh support 17 and the lower frame member 14 follows the angle between the front beams 6 and the lower frame member 14. When the upper frame member 16 is at its highest position, the thigh support 17 is fully raised.

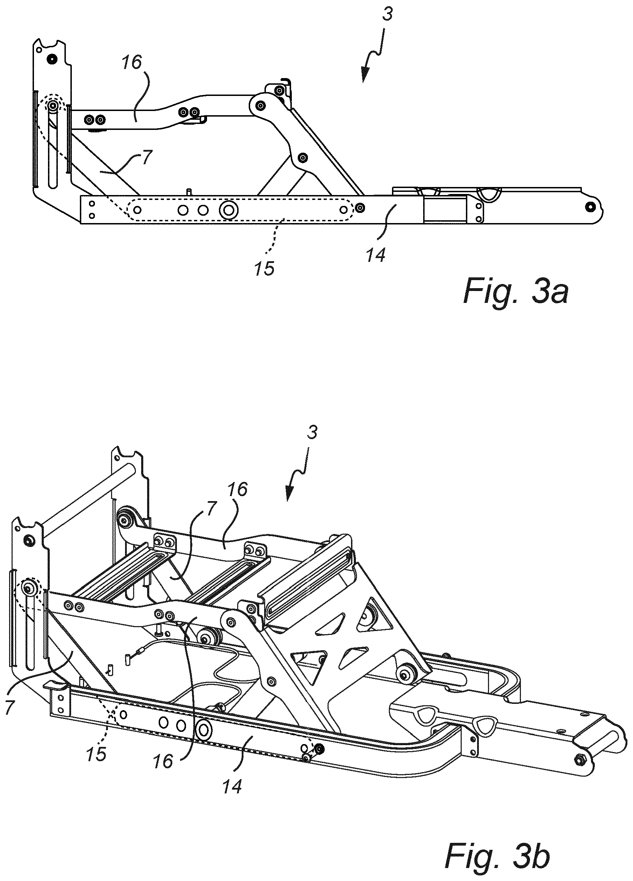

Figs. 3a-b illustrate a child restraint 1 comprising a sliding member 15, arranged inside the lower frame member 14, to which the front and rear beams 6, 7 are connected. By moving the sliding member 15 back and forth, the upper frame member 16 is raised and lowered. The position of the sliding member 15 thus decides the vertical position of the upper frame member 16 and consequently the position of a seat portion attached to the upper frame member 16 (not illustrated in Figs. 3a-b).

Figs. 4a-c illustrate different configurations of the base portion 3 in Fig. 2. As mentioned above, the base portion 3 comprises at least one guide plate 9 that is connected to the lower frame member 14 and to which at least one of the upper frame member 16 and the rear beam 7 is movably connected to. The movable connection between the upper frame member 16 and the guide plate 9 allows the upper frame member 16 to move in a vertical direction such that the height of the seat portion 2 may be changed.

In Fig. 4a, the upper frame member 16 is located at the highest position, and in Fig. 4c the upper frame member 16 is located at the lowest position. In Fig. 4b, the upper frame member 16 is located in a position between the highest position and the lowest position.

As can be seen in Figs. 4a-c, the guide plate 9 extends substantially perpendicular to the lower frame member 14. To enable vertical movement of the upper frame member 16 relative to the lower frame member 14, the guide plate 9 comprises a sliding rail 10 extending in the same direction as the guide plate 9, i.e. substantially perpendicular in relation to the lower frame member 14. The sliding rail 10 has an upper end position and a lower end position. The sliding rail 10 has a certain width and extends, similar to the guide plate 9, substantially vertically. At least one of the upper frame member 16 and the rear beam 7 comprises a protrusion 11 adapted to fit in, and slide along, the sliding rail 10. When the upper frame member 16 is at its highest position, the protrusion 11 is located in the upper end position of the sliding rail 10, and when the upper frame member 16 is at its lowest position, the protrusion 11 is located in the lower end position of the sliding rail 10.

The upper frame member 16 and the rear beam 7 may be connected to each other, and that at least one of them may be connected to the guide plate 9 which provides stability to the base portion 3.

The movement of the protrusion 11 between the upper end position and the lower end position may be adjusted by pushing a sliding member 15 back and forth. The front and rear beams 6, 7 are pivotally connected to the upper and lower frame members 12, 14. The angle between the front beam 6 and the lower frame member 14 and the rear beam 7 and the lower frame member 14, respectively, changes when the sliding member 15 is moving forward and the protrusion 11 is moving towards the lower end position.

The person skilled in the art realizes that the present invention by no means is limited to the embodiments described above. On the contrary, many modifications and variations are possible within the scope of the appended claims.

## Claims

1. A height-adjustable child restraint (1) for use in a forward facing position, said child restraint (1) comprising:
a seat portion (2) for holding a child and a base portion (3), wherein said base portion (3) comprises
an upper frame member (16) for connection with said seat portion (2) and a lower frame member (14) to be placed on a vehicle seat, wherein at least one front beam (6) connects a front portion of said upper frame member (16) to a front portion of said lower frame member (14), and at least one rear beam (7) connects a rear portion of said upper frame member (16) to a rear portion of said lower frame member (14) such that a parallelogram is formed; and
at least one guide plate (9) connected to said lower frame member (14), wherein at least one of said upper frame member (16) and said rear beam (7) is movably connected to said guide plate (9) for vertical movement of said upper frame member (16) relative said guide plate (9).

2. The height-adjustable child restraint (1) according to claim 2, wherein said at least one guide plate (9) comprises a sliding rail (10) having an upper end position and a lower end position and extending substantially vertically, and at least one of said upper frame member (16) and said rear beam (7) comprises at least one protrusion (11) adapted to slide along said sliding rail (10).

3. The height-adjustable child restraint (1) according to claim 1 or 2, wherein said guide plate (9) has a main extension substantially perpendicular to said lower frame member (14).

4. The height-adjustable child restraint (1) according to claim 3, wherein the guide plate (9) comprises a first part adapted to be connected with at least one of said upper frame member (16) and said rear beam (7), said first part extending parallel to said main extension, and a second part adapted to be connected with said lower frame member (14), and wherein said second part deviates from said main extension.

5. The height-adjustable child restraint (1) according to claim 4, wherein said second part of said guide plate (9) has a main extension that is substantially nonparallel with both said lower frame member (14) and said first part of said guide plate (9).

6. The height-adjustable child restraint (1) according to any one of the preceding claims, wherein said rear portion of said lower frame member (14) has an endpoint (18) forward to and offset from a plane of said main extension.

7. The height-adjustable child restraint (1) according to any one of the preceding claims, further comprising a sliding member (15) arranged inside said lower frame member (14) and wherein said front and rear beams (6, 7) are connected to said sliding member (15).

8. The height-adjustable child restraint (1) according to any one of the preceding claims, wherein said front beam (6) comprises a stabilizing element (8) pivotally connected to said lower frame member (14).

9. The height-adjustable child restraint (1) according to any one of the preceding claims, wherein said front and rear beams (6, 7) are pivotally connected to said upper and lower frame members (16, 14).

10. The height-adjustable child restraint (1) according to any one of the preceding claims, wherein said guide plate (9) is integrated into said lower frame member (14).

11. The height-adjustable child restraint (1) according to any one of the preceding claims, wherein said guide plate (9) extends above said upper frame member (16) when said upper frame member is arranged in its uppermost position.

12. The height-adjustable child restraint (1) according to any one of the preceding claims, further comprising a thigh support (17) located adjacent to said front beam (6).

13. The height-adjustable child restraint (1) according to any one of the preceding claims, configured to receive the vehicle's safety belt for securing the child.

14. A height-adjustable child restraint (1) according to any one of the preceding claims, wherein said upper frame member (16) and said rear beam (7) both are movably connected to said guide plate (9).

15. A height-adjustable child restraint (1) according to any one of the preceding claims, wherein said lower frame member (14) comprises an inner surface and an outer surface, and wherein said front beam (6), said rear beam (7) and said guide plate (9) are connected to said inner surface of said lower frame member (14).

## Patentansprüche

1. Höhenverstellbares Kinderrückhaltesystem (1) zur Verwendung in einer nach vorn gerichteten Position, wobei das Kinderrückhaltesystem (1) Folgendes umfasst:
einen Sitzabschnitt (2) zum Halten eines Kindes und einen Basisabschnitt (3), wobei der Basisabschnitt (3) Folgendes umfasst
ein oberes Rahmenelement (16) zur Verbindung mit dem Sitzabschnitt (2) und ein auf einem Fahrzeugsitz zu platzierendes unteres Rahmenelement (14), wobei mindestens ein vorderer Träger (6) einen vorderen Abschnitt des oberen Rahmenelements (16) mit einem vorderen Abschnitt des unteren Rahmenelements (14) verbindet und mindestens ein hinterer Träger (7) einen hinteren Abschnitt des oberen Rahmenelements (16) mit einem hinteren Abschnitt des unteren Rahmenelements (14) verbindet, so dass ein Parallelogramm gebildet wird; und
mindestens eine Führungsplatte (9), die mit dem unteren Rahmenelement (14) verbunden ist, wobei das obere Rahmenelement (16) und/oder der hintere Träger (7) zur vertikalen Bewegung des oberen Rahmenelements (16) relativ zur Führungsplatte (9) beweglich mit der Führungsplatte (9) verbunden ist.

2. Höhenverstellbares Kinderrückhaltesystem (1) nach Anspruch 2, wobei die mindestens eine Führungsplatte (9) eine Gleitschiene (10) umfasst, die eine obere Endposition und eine untere Endposition aufweist und sich im Wesentlichen vertikal erstreckt, und wobei das obere Rahmenelement (16) und/oder der hintere Träger (7) mindestens einen Vorsprung (11) aufweist, der dazu geeignet ist, entlang der Gleitschiene (10) zu gleiten.

3. Höhenverstellbares Kinderrückhaltesystem (1) nach Anspruch 1 oder 2, wobei die Führungsplatte (9) eine Haupterstreckung im Wesentlichen senkrecht zum unteren Rahmenelement (14) aufweist.

4. Höhenverstellbares Kinderrückhaltesystem (1) nach Anspruch 3, wobei die Führungsplatte (9) einen ersten Teil, der dazu geeignet ist, mit dem oberen Rahmenelement (16) und/oder dem hinteren Träger (7) verbunden zu sein, wobei sich der erste Teil parallel zur Haupterstreckung erstreckt, und einen zweiten Teil umfasst, der dazu geeignet ist, mit dem unteren Rahmenelement (14) verbunden zu sein, und wobei der zweite Teil von der Haupterstreckung abweicht.

5. Höhenverstellbares Kinderrückhaltesystem (1) nach Anspruch 4, wobei der zweite Teil der Führungsplatte (9) eine Haupterstreckung aufweist, die im Wesentlichen nicht parallel zu sowohl dem unteren Rahmenelement (14) als auch dem ersten Teil der Führungsplatte (9) verläuft.

6. Höhenverstellbares Kinderrückhaltesystem (1) nach einem der vorhergehenden Ansprüche, wobei der hintere Abschnitt des unteren Rahmenelements (14) einen Endpunkt (18) aufweist, der vor einer Ebene der Haupterstreckung liegt und von dieser versetzt ist.

7. Höhenverstellbares Kinderrückhaltesystem (1) nach einem der vorhergehenden Ansprüche, das ferner ein Gleitelement (15) umfasst, das innerhalb des unteren Rahmenelements (14) angeordnet ist, und wobei der vordere und der hintere Träger (6, 7) mit dem Gleitelement (15) verbunden sind.

8. Höhenverstellbares Kinderrückhaltesystem (1) nach einem der vorhergehenden Ansprüche, wobei der vordere Träger (6) ein Stabilisierungselement (8) umfasst, das mit dem unteren Rahmenelement (14) schwenkbar verbunden ist.

9. Höhenverstellbares Kinderrückhaltesystem (1) nach einem der vorhergehenden Ansprüche, wobei der vordere und der hintere Träger (6, 7) mit dem oberen und dem unteren Rahmenelement (16, 14) schwenkbar verbunden sind.

10. Höhenverstellbares Kinderrückhaltesystem (1) nach einem der vorhergehenden Ansprüche, wobei die Führungsplatte (9) in das untere Rahmenelement (14) integriert ist.

11. Höhenverstellbares Kinderrückhaltesystem (1) nach einem der vorhergehenden Ansprüche, wobei sich die Führungsplatte (9) über dem oberen Rahmenelement (16) erstreckt, wenn das obere Rahmenelement in seiner obersten Position angeordnet ist.

12. Höhenverstellbares Kinderrückhaltesystem (1) nach einem der vorhergehenden Ansprüche, das ferner eine Oberschenkelstütze (17) umfasst, die sich neben dem vorderen Träger (6) befindet.

13. Höhenverstellbares Kinderrückhaltesystem (1) nach einem der vorhergehenden Ansprüche, das dazu ausgelegt ist, den Sicherheitsgurt des Fahrzeugs zum Sichern des Kindes aufzunehmen.

14. Höhenverstellbares Kinderrückhaltesystem (1) nach einem der vorhergehenden Ansprüche, wobei das obere Rahmenelement (16) und der hintere Träger (7) beide beweglich mit der Führungsplatte (9) verbunden sind.

15. Höhenverstellbares Kinderrückhaltesystem (1) nach einem der vorhergehenden Ansprüche, wobei das untere Rahmenelement (14) eine Innenfläche und eine Außenfläche umfasst, und wobei der vordere Träger (6), der hintere Träger (7) und die Führungsplatte (9) mit der Innenfläche des unteren Rahmenelements (14) verbunden sind.

## Revendications

1. Dispositif (1) ajustable en hauteur de retenue pour enfants, destiné à être utilisé dans une position orientée vers l'avant, ledit dispositif de retenue pour enfants (1) comprenant :
une portion siège (2) destinée à contenir un enfant, et une portion base (3), dans lequel ladite portion base (3) comprend
un organe cadre supérieur (16) destiné à se relier à ladite portion siège (2), et un organe cadre inférieur (14) destiné à être placé sur un siège de véhicule, dans lequel au moins une barre avant (6) relie une portion avant dudit organe cadre supérieur (16) à une portion avant dudit organe cadre inférieur (14), et au moins une barre arrière (7) relie une portion arrière dudit organe cadre supérieur (16) à une portion arrière dudit organe cadre inférieur (14) de manière telle qu'un parallélogramme est formé ; et
au moins une plaque de guidage (9) reliée audit organe cadre inférieur (14), dans lequel au moins un dudit organe cadre supérieur (16) et de ladite barre arrière (7) est relié de façon mobile à ladite plaque de guidage (9) pour le mouvement vertical dudit organe cadre supérieur (16) relativement à ladite plaque de guidage (9).

2. Dispositif (1) ajustable en hauteur de retenue pour enfants selon la revendication 2, dans lequel ladite au moins une plaque de guidage (9) comprend un rail de coulissement (10) ayant une position d'extrémité supérieure et une position d'extrémité inférieure et s'étendant sensiblement verticalement, et au moins un dudit organe cadre supérieur (16) et de ladite barre arrière (7) comprend au moins une saillie (11) adaptée pour coulisser le long dudit rail de coulissement (10).

3. Dispositif (1) ajustable en hauteur de retenue pour enfants selon la revendication 1 ou 2, dans lequel ladite plaque de guidage (9) a une extension principale sensiblement perpendiculaire audit organe cadre inférieur (14).

4. Dispositif (1) ajustable en hauteur de retenue pour enfants selon la revendication 3, dans lequel la plaque de guidage (9) comprend une première partie adaptée pour être reliée à au moins un dudit organe cadre supérieur (16) et de ladite barre arrière (7), ladite première partie s'étendant parallèlement à ladite extension principale, et une seconde partie adaptée pour être reliée audit organe cadre inférieur (14), et dans lequel ladite seconde partie s'écarte de ladite extension principale.

5. Dispositif (1) ajustable en hauteur de retenue pour enfants selon la revendication 4, dans lequel ladite seconde partie de ladite plaque de guidage (9) a une extension principale qui est sensiblement non parallèle aux deux dudit organe cadre inférieur (14) et de ladite première partie de ladite plaque de guidage (9).

6. Dispositif (1) ajustable en hauteur de retenue pour enfants selon l'une quelconque des revendications précédentes, dans lequel ladite portion arrière dudit organe cadre inférieur (14) a un point d'extrémité (18) vers l'avant d'un plan de ladite extension principale et décalé par rapport à celui-ci.

7. Dispositif (1) ajustable en hauteur de retenue pour enfants selon l'une quelconque des revendications précédentes, comprenant en outre un organe coulissant (15) agencé à l'intérieur dudit organe cadre inférieur (14) et dans lequel lesdites barres avant et arrière (6, 7) sont reliées audit organe coulissant (15).

8. Dispositif (1) ajustable en hauteur de retenue pour enfants selon l'une quelconque des revendications précédentes, dans lequel ladite barre avant (6) comprend un élément stabilisateur (8) relié de façon pivotante audit organe cadre inférieur (14).

9. Dispositif (1) ajustable en hauteur de retenue pour enfants selon l'une quelconque des revendications précédentes, dans lequel lesdites barres avant et arrière (6, 7) sont reliées de façon pivotante auxdits organes cadres supérieur et inférieur (16, 14).

10. Dispositif (1) ajustable en hauteur de retenue pour enfants selon l'une quelconque des revendications précédentes, dans lequel ladite plaque de guidage (9) est intégrée dans ledit organe cadre inférieur (14).

11. Dispositif (1) ajustable en hauteur de retenue pour enfants selon l'une quelconque des revendications précédentes, dans lequel ladite plaque de guidage (9) s'étend au-dessus dudit organe cadre supérieur (16) lorsque ledit organe cadre supérieur est agencé dans sa position la plus haute.

12. Dispositif (1) ajustable en hauteur de retenue pour enfants selon l'une quelconque des revendications précédentes, comprenant en outre un support de cuisses (17) situé de façon adjacente à ladite barre avant (6).

13. Dispositif (1) ajustable en hauteur de retenue pour enfants selon l'une quelconque des revendications précédentes, configuré pour recevoir la ceinture de sécurité du véhicule pour attacher l'enfant.

14. Dispositif (1) ajustable en hauteur de retenue pour enfants selon l'une quelconque des revendications précédentes, dans lequel ledit organe cadre supérieur (16) et ladite barre arrière (7) sont tous les deux reliés de façon mobile à ladite plaque de guidage (9).

15. Dispositif (1) ajustable en hauteur de retenue pour enfants selon l'une quelconque des revendications précédentes, dans lequel ledit organe cadre inférieur (14) comprend une surface intérieure et une surface extérieure, et dans lequel ladite barre avant (6), ladite barre arrière (7), et ladite plaque de guidage (9) sont reliées à ladite surface intérieure dudit organe cadre inférieur (14).
